# EUROPÄISCHE PATENTSCHRIFT

(11) **EP 3 924 199 B1**
(45) Veröffentlichungstag und Bekanntmachung des Hinweises auf die Patenterteilung: **30.07.2025**
(21) Anmeldenummer: 20704183.1
(22) Anmeldetag: 16.01.2020
(51) Int. Cl.: B60K 1/00, B60K 7/00, B60K 17/354, B60K 17/356, B60K 17/35, F16D 11/10

(54) **ANTRIEBSVORRICHTUNG FÜR EINE FAHRZEUGACHSE EINES FAHRZEUGS**
DRIVE DEVICE FOR A VEHICLE AXLE OF A VEHICLE
DISPOSITIF D'ENTRAÎNEMENT POUR ESSIEU DE VÉHICULE D'UN VÉHICULE

(30) Priorität: 14.02.2019 DE 102019201945
(43) Veröffentlichungstag der Anmeldung: 22.12.2021
(73) Patentinhaber: Audi AG, 85045 Ingolstadt (DE)
(72) Erfinder: HOLZAPFEL, Christian, 85101 Lenting (DE)
(74) Vertreter: Bierschneider, Walter
(86) Internationale Anmeldenummer: PCT/EP2020/050997
(87) Internationale Veröffentlichungsnummer: WO 2020/164846

(56) Entgegenhaltungen:
- DE-A1- 102016 224 864
- DE-A1- 102018 114 626

## Beschreibung

Die Erfindung betrifft eine Antriebsvorrichtung für eine Fahrzeugachse eines zweispurigen Fahrzeugs nach dem Oberbegriff des Anspruches 1.

Bei einem beispielhaften allradbetriebenen Fahrzeug mit Elektroantrieb können die Vorderachse und die Hinterachse voneinander unabhängig zumindest eine Elektromaschine aufweisen. Je nach Fahrbetrieb kann zum Beispiel die Elektromaschine der Vorderachse nicht bestromt sein und alleine die Elektromaschine der Hinterachse bestromt sein, so dass das Fahrzeug nur mit der Hinterachse angetrieben wird. Hierdurch wird der gesamte Wirkungsgrad erhöht und die Reichweite vergrößert. Allerdings treten bei einem solchen reinen Hinterachs-Betrieb Reibungsverluste (Luft- und Lagerreibung, Verzahnungsreibung im Getriebe, Pantschverluste, etc.) durch den mitgeschleppten, deaktivierten Vorderachs-Antrieb auf.

Aus der DE 10 2015 210 227 A1 ist ein Antriebsstrang für ein Kraftfahrzeug mit einem kupplungsgesteuerten Allradantrieb bekannt. Aus der DE 20 2015 000 397 U1 ist eine Betätigungsvorrichtung für eine Klauenkupplung bekannt. Aus der DE 1 575 783 A ist eine elektromagnetische Kupplung bekannt. Die DE 10 2016 224 864 A1 offenbart eine gattungsgemäße Antriebsvorrichtung.

Die Aufgabe der Erfindung besteht darin, eine Antriebsvorrichtung für eine Fahrzeugachse eines insbesondere elektrisch betriebenen Fahrzeugs bereitzustellen, bei dem im Fahrbetrieb Schleppverluste in einer deaktivierten Antriebseinheit reduziert werden können.

Die Aufgabe ist durch die Merkmale des Anspruches 1 gelöst. Bevorzugte Weiterbildungen der Erfindung sind in den Unteransprüchen offenbart.

Erfindungsgemäß treibt die Antriebseinheit ausgangsseitig auf zumindest eine zu einem Fahrzeugrad führende Antriebswelle ab. Diese ist gemäß dem Anspruch 1 aufgeteilt in einen radseitigen Wellenabschnitt und in einen achsseitigen Wellenabschnitt, die mittels einer Formschlusskupplung trieblich miteinander koppelbar oder voneinander abkoppelbar sind. Im abgekoppelten Zustand erfolgt zwischen dem radseitigen Wellenabschnitt und dem achsseitigen Wellenabschnitt keine Momentenübertragung, so dass im Fahrbetrieb sowie bei deaktivierter Antriebseinheit Schleppverluste in der deaktivierten Antriebseinheit vermieden werden. Auf diese Weise kann beispielhaft eine Fahrzeugachse (speziell die Vorderachse) nach Bedarf ab- bzw. angekoppelt werden, und zwar bevorzugt unabhängig vom Fahrzustand.

Erfindungsgemäß weist die Formschlusskupplung eine Schiebemuffe auf, die auf einer Steckverzahnung eines ersten Wellenabschnittes drehfest, jedoch axial verschiebbar angeordnet ist. Die Schiebemuffe ist erfindungsgemäß mittels einer, von einem Aktor generierten axialen Stellkraft zwischen einem geöffneten Kupplungszustand, in dem die Schiebemuffe außer Formschlussverbindung mit dem zweiten Wellenabschnitt gebracht ist, und einem geschlossenen Kupplungszustand verschiebbar, in dem die Schiebemuffe in Formschlussverbindung mit dem zweiten Wellenabschnitt gebracht ist.

Im Hinblick auf die hohe Packagedichte im Bereich der Fahrzeugachse ist eine bauraumreduzierte, kompakte Realisierung der Formschlusskupplung mitsamt Aktor von großer Bedeutung. Vor diesem Hintergrund ist dem Aktor erfindungsgemäß eine Aktorhülse zugeordnet, die auf einem zylindrischen Schiebemuffen-Außenumfang angeordnet ist. Zur Drehentkopplung von der im Betrieb drehenden Schiebemuffe ist die Aktorhülse erfindungsgemäß über zumindest ein Drehlager, bevorzugt Wälzlager, auf dem Schiebemuffen-Außenumfang gelagert, und zwar so, dass die vom Aktor generierte axiale Stellkraft über die drehentkoppelte Aktorhülse und das Drehlager, bevorzugt Wälzlager, in die Schiebemuffe eingeleitet wird.

In einer ersten Ausführungsvariante kann für eine Stellkraft-Übertragung sowohl der Lageraußenring des Wälzlagers stellkraftübertragend an die Aktorhülse angebunden sein als auch der Lagerinnenring des Wälzlagers stellkraftübertragend an der Schiebemuffe angebunden sein.

Die obige Aktorhülse kann mittels des Aktors zwischen einer Offenposition, bei der die Formschlusskupplung geöffnet ist, und einer Schließposition verstellt werden. Hierzu kann der Aktor über eine Getriebestufe mit der Aktorhülse zusammenwirken. In einer bauraumgünstigen Realisierung kann diese Getriebestufe eine Außenverzahnung auf dem zylindrischen Schiebemuffen-Außenumfang aufweisen. In der Außenverzahnung sind die Zähne in der Axialrichtung voneinander beabstandet und in Zahneingriff mit einem Zahnrad einer Aktorwelle eines Elektromotors, der den Aktor bildet.

Bevorzugt ist eine Formschlusskupplung als Klauenkupplung ausgeführt, bei der die Schiebemuffe und der zweite Wellenabschnitt einander axial zugewandte, rad- und achsseitige Schaltklauen aufweist. Der zylindrische Schiebemuffen-Außenumfang kann unter Bildung eines Inneneckbereiches in die durchmessergrößeren Schaltklauen übergehen. In dem so gebildeten Inneneckbereich kann die Aktorhülse bauraumgünstig angeordnet sein.

Beim Schließvorgang der obigen Klauenkupplung können die rad- und achsseitigen Schaltklauen einander in der Axialrichtung Zahn auf Lücke gegenüberliegen, so dass eine leichtgängige Formschlusskupplung erfolgen kann. Im wahrscheinlicheren Fall kommen beim Schließvorgang dagegen zunächst die Schaltklauen Zahn auf Zahn in Anlage. Ab Erreichen der Anlage Zahn auf Zahn wird erfindungsgemäß die Aktorhülse weiter bis in ihre Schließposition verstellt, und zwar unter Aufbau einer axial auf die Schaltklauen wirkenden Federkraft einer Überlastfeder, mittels der die rad- und achsseitigen Schaltklauen gegeneinander verspannt sind. Sobald durch eine geringe relative Winkelverdrehung der beiden Kupplungshälften die Schaltklauen in eine Relativlage Zahn auf Lücke gebracht werden, können die rad- und achsseitigen Schaltklauen unter Abbau der Federkraft in Formschlussverbindung gelangen.

**In** einer technischen Realisierung können die radseitigen Schaltklauen an einem Trägerring ausgebildet sein, der über eine Steckverzahnung drehfest sowie axial verschiebbar auf dem radseitigen Wellenabschnitt angeordnet ist. Der Trägerring kann auf seiner dem achsseitigen Wellenabschnitt axial gegenüberliegenden Seite über die oben erwähnte Überlastfeder gegen einen Axialanschlag des radseitigen Wellenabschnitts abgestützt sein. Sofern daher beim Schließvorgang der Klauenkupplung die rad- und achsseitigen Schaltklauen in eine Anlage Zahn auf Zahn kommen, wird die Aktorhülse mitsamt Schiebemuffe in die Schließposition verstellt, so dass die Schiebemuffe den Trägerring unter Aufbau der Federkraft um einen Ausgleichshub auf dem radseitigen Wellenabschnitt verstellt. Sobald durch eine geringe relative Winkelverdrehung der beiden Kupplungshälften Zahn auf Lücke steht, erfolgt die Formschlussverbindung, bei der der radseitige Trägerring unter Aufbrauch des obigen Ausgleichshubes sowie unter Abbau der Federkraft in Formschlussverbindung mit den achsseitigen Schaltklauen gelangt.

Nachfolgend wird eine zweite Ausführungsvariante beschrieben, bei der die Aktorhülse nicht mehr stellkraftübertragend auf dem Lageraußenring des Wälzlagers sitzt, sondern vielmehr axial verschiebbar auf dem Lageraußenring des Wälzlagers sitzt. Der Lagerinnenring des Wälzlagers bleibt nach wie vor axial ortsfest sowie drehfest, das heißt stellkraftübertragend auf der Schiebemuffe angeordnet. Zwischen der Aktorhülse und dem zylindrischen Schiebemuffen-Außenumfang kann ein Ringspalt bereitgestellt sein, in dem die Überlastfeder angeordnet ist. Die Überlastfeder ist in Axialrichtung zwischen einem Aktorhülsen-Axialanschlag und dem Wälzlager-Lageraußenring abgestützt. Beim Schließvorgang können somit die Aktorhülse und die Schiebemuffe bewegungsgekoppelt bis Erreichen einer Anlage Zahn auf Zahn verstellt werden. Ab Erreichen der Anlage Zahn auf Zahn wird die Aktorhülse bewegungsentkoppelt von der Schiebemuffe weiter bis in ihre Schließposition verstellt, und zwar unter Aufbau der Federkraft der Überlastfeder. Durch eine geringe relative Winkelverdrehung der beiden Kupplungshälften können die Schaltklauen in eine Relativlage Zahn auf Lücke gebracht werden, so dass die Schiebemuffe unter Abbau der Federkraft der Überlastfeder mitsamt darauf ausgebildeten achsseitigen Schaltklauen in Formschlussverbindung gebracht wird.

Nachfolgend sind zwei Ausführungsbeispiele der Erfindung anhand der beigefügten Figuren beschrieben.

Es zeigen:
- Figur 1: in grob schematischer Darstellung ein elektrisch betriebenes Kraftfahrzeug von oben mit hervorgehobenen, skizziert dargestellten Fahrzeugachsen;
- Figur 2: eine Antriebsvorrichtung für die Vorderachse des Fahrzeugs;
- Figur 3: in einer Teilansicht ein erstes Ausführungsbeispiel einer Klauenkupplung, die im geöffneten Kupplungszustand dargestellt ist;
- Figur 4: eine Ansicht entsprechend der Figur 3, anhand der ein Schließvorgang der Klauenkupplung veranschaulicht ist;
- Figur 5 und 6: jeweils Ansichten entsprechend der Figur 3 und 4, anhand derer die Funktionsweise der Überlastfeder veranschaulicht ist.

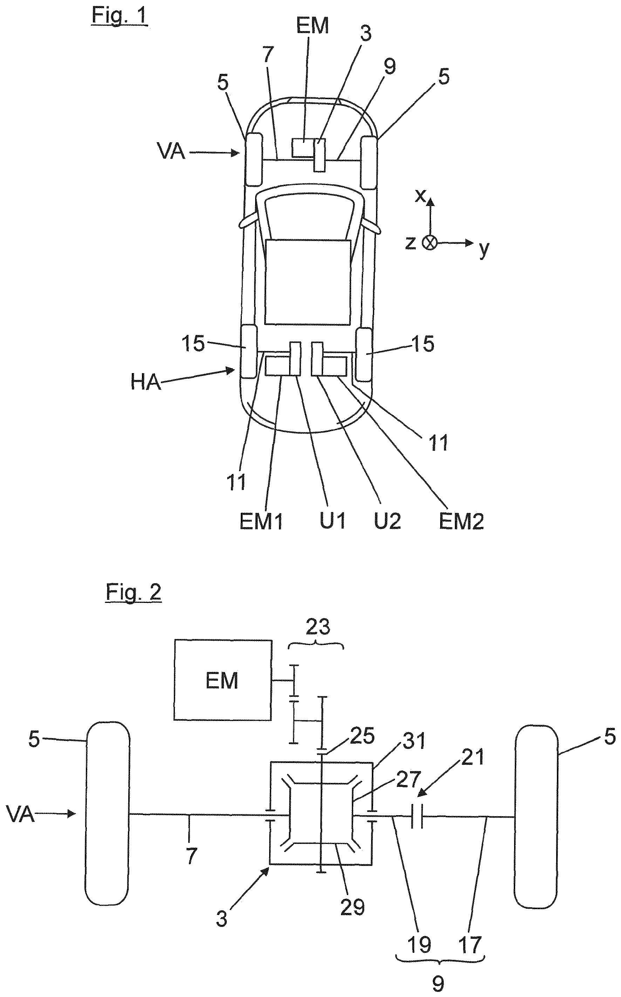

In der Figur 1 ist ein elektrisch betriebenes Kraftfahrzeug gezeigt, das eine elektrisch antreibbare Vorderachse VA und eine elektrisch antreibbare Hinterachse HA aufweist. Die Vorderachse VA ist mit genau einer Elektromaschine EM ausgestattet, die über ein Vorderachsdifferenzial 3 auf die zum rechten und linken Vorderrad 5 führenden linken und rechten Antriebswellen 7, 9 abtreibt. Die Hinterachse HA weist eine Antriebsvorrichtung auf, bei der im Unterschied zur Vorderachse VA jedem der Hinterräder 15 jeweils eine Elektromaschine EM1, EM2 zugeordnet ist, die über Übersetzungsstufen U1, U2 mit den Antriebswellen 11 der Hinterachse HA trieblich verbunden sind. Wie aus der Figur 1 weiter hervorgeht, ist die vordere rechte Antriebswelle 9 aufgeteilt in einen radseitigen Wellenabschnitt 17 und in einen achsseitigen Wellenabschnitt 19, die mittels einer Klauenkupplung 21 koppelbar sind oder voneinander abkoppelbar sind.

Bei geöffneter Klauenkupplung 21 bleibt daher im Fahrbetrieb lediglich eine lastlose Ausgleichsbewegung der Ausgleichskegelräder 29 im Vorderachsdifferenzial 3. Der Rest der Antriebseinheit (das heißt Getriebe und Elektromaschine) kommen dagegen zum Stillstand, so dass Reibungsverluste stark reduziert sind.

Zum Ankoppeln (d.h. beim Schließen der Klauenkupplung 21) wird zunächst die Elektromaschine EM bestromt und somit der verschiebliche Teil der Klauenkupplung 21 auf die aktuelle Raddrehzahl synchronisiert. Ist nahezu Synchronität erreicht, wird der Aktor 49 aktiviert. Wie später beschrieben ist, wirkt der Aktor 49 über eine Verzahnung auf eine nicht rotierende Aktorhülse 53. Diese drückt über eine Feder-Kugellager-Kombination auf den verschieblichen Teil der Klauenkupplung 21.

Gemäß der Figur 2 ist die Elektromaschine EM der Vorderachse VA über ein Vorgelege 23 mit einem eingangsseitigen Außenzahnrad 25 des Vorderachsdifferenzials 3 trieblich verbunden. An der Ausgangsseite des Vorderachsdifferenzials 3 sind Achskegelräder 27 an den beiden Antriebswellen 7, 9 angebunden. Die Achskegelräder 27 und damit verzahnte Ausgleichskegelräder 29 sind innerhalb eines Ausgleichsgehäuses 31 des Achsdifferenzials 3 positioniert.

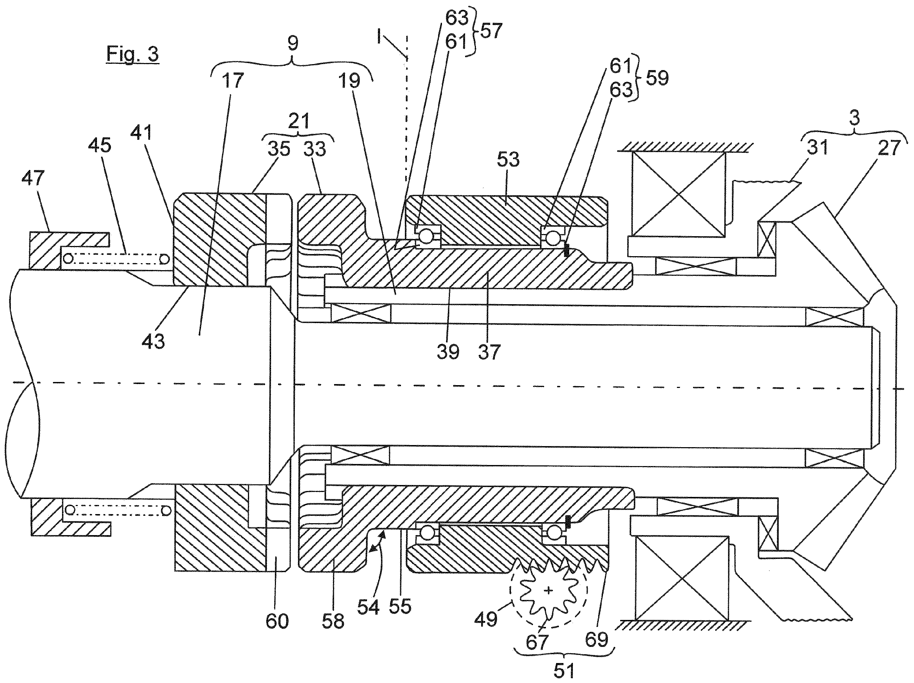

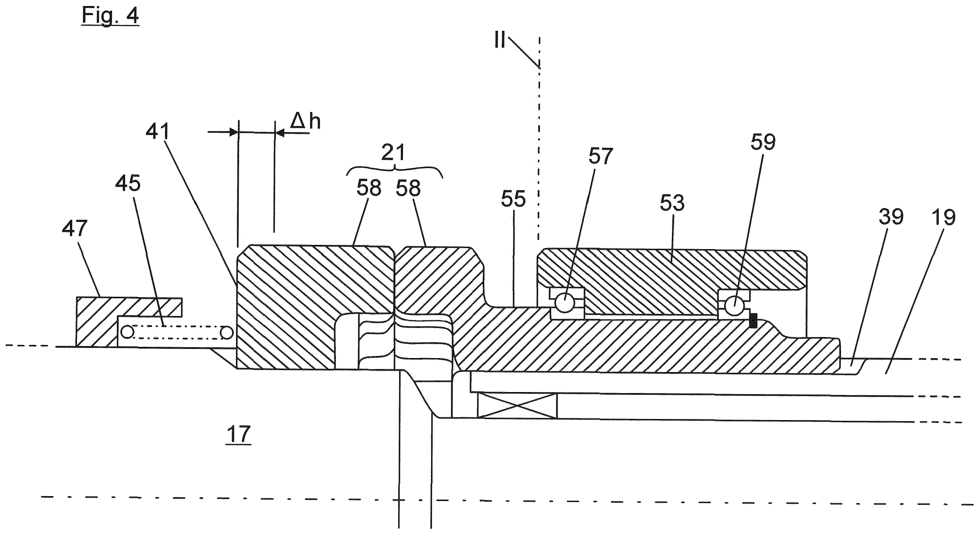

Nachfolgend wird anhand der Figur 3 und 4 der Aufbau und die Funktionsweise der Klauenkupplung 21 gemäß einem ersten Ausführungsbeispiel beschrieben. In der Figur 3 ist das Achskegelrad 27 mit einer Achshohlwelle verlängert, die den achsseitigen Wellenabschnitt 19 bildet. Radial innerhalb der Achshohlwelle 19 ist eine zum Vorderrad 5 geführte Steckwelle drehgelagert, die den radseitigen Wellenabschnitt 17 bildet. Die Klauenkupplung 21 weist in der Figur 3 achsseitige Schaltklauen 33 und radseitige Schaltklauen 35 auf, die bei geschlossener Klauenkupplung 21 miteinander in Formschlussverbindung sind. Die achsseitigen Schaltklauen 33 sind in der Figur 3 Bestandteil einer Schiebemuffe 37, die auf einer Steckverzahnung 39 der Achshohlwelle 19 drehfest, jedoch axial verschiebbar angeordnet ist. Die radseitigen Schaltklauen 35 sind auf einem Trägerring 41 ausgebildet, der über eine Steckverzahnung 43 auf der Steckwelle 17 drehfest, jedoch axial verschiebbar gelagert ist. Der Trägerring 41 ist auf seiner der Achshohlwelle 19 axial gegenüberliegenden Seite mittels einer Überlastfeder 45 gegen einen Axialanschlag 47 der Steckwelle 17 abgestützt.

Die auf der Achshohlwelle 19 axial verschiebbar angeordnete Schiebemuffe 37 ist in der Figur 3 über einen Aktor 49 betätigbar, der als Elektromotor realisiert ist. Der Aktor 49 ist über eine Getriebestufe 51 in trieblicher Verbindung mit einer Aktorhülse 53. Diese ist auf einem zylindrischen Schiebemuffen-Außenumfang 55 angeordnet. Zur Drehentkopplung von der im Betrieb drehenden Schiebemuffe 37 ist die Aktorhülse 53 über zwei Wälzlager (wahlweise auch Gleitlager) 57, 59 auf dem zylindrischen Schiebemuffen-Außenumfang 55 gelagert. In der Figur 3 ist ein Lageraußenring 61 der Wälzlager 57, 59 in den Innenumfang der Aktorhülse 53 eingepresst, d.h. stellkraftübertragend an der Aktorhülse 53 angebunden. Zudem ist ein Lagerinnenring 63 des Wälzlagers 57, 59 auf dem Schiebemuffen-Außenumfang 55 aufgepresst, d.h. stellkraftübertragend an der Schiebemuffe 37 angebunden. Auf diese Weise wird eine vom Aktor 49 generierte axiale Stellkraft Fs über die drehentkoppelte Aktorhülse 53 und weiter über die beiden Wälzlager 57, 59 in die Schiebemuffe 37 eingeleitet.

Die zwischen dem Aktor 49 und der Aktorhülse 53 geschaltete Getriebestufe 51 ist in der Figur 3 durch ein auf einer Aktorwelle ausgebildetes Antriebszahnrad 67 ausgebildet, das in Zahneingriff mit einer Außenverzahnung 69 auf der Außenumfangsseite der Schiebemuffe 37 ist. Die Außenverzahnung 69 weist voneinander in Axialrichtung beabstandete Zähne auf.

Nachfolgend wird anhand der Figur 3 ein Schließvorgang der Klauenkupplung 21 beschrieben, bei der die radseitigen und achsseitigen Schaltklauen 33, 35 einander Zahn 58 auf Lücke 60 axial gegenüberliegen. In diesem Fall wird der Aktor 49 aktiviert, um die Aktorhülse 53 mitsamt der damit bewegungsgekoppelten Schiebemuffe 37 von der dargestellten Offenposition I in eine Schließposition S zu verschieben, in der die rad- und achsseitigen Schaltklauen 33, 35 leichtgängig in Eingriff gebracht sind.

Anhand der Figur 4 wird ein Schließvorgang beschrieben, bei dem die rad- und achsseitigen Schaltklauen 33, 35 nicht Zahn 58 auf Lücke 60 einander axial gegenüberliegen, sondern vielmehr Zahn 58 auf Zahn 58 einander gegenüberliegen. In diesem Fall kommen beim Schließvorgang die rad- und achsseitigen Schaltklauen 33, 35 zunächst Zahn 58 auf Zahn 58 in Anlage. Ab Erreichen der Anlage Zahn 58 auf Zahn 58 (Figur 4) wird die Aktorhülse 53 mitsamt Schiebemuffe 37 um einen Überlasthub Δh (in der Figur 4 nicht eingezeichnet) weiter bis in die Schließposition II verstellt, wobei der Trägerring 41 unter Aufbau einer Federkraft der Überlastfeder 45 um den Überlasthub h auf der Steckwelle 17 verschoben wird. Sobald durch eine geringe relative Winkelverdrehung Zahn 58 auf Lücke 60 gegenübersteht, wird der Trägerring 41 unter Aufbrauch des Überlasthubes Δh sowie unter Abbau der Federkraft der Überlastfeder 45 schlagartig in Formschlussverbindung mit den achsseitigen Schaltklauen 33 der Schiebemuffe 37 gebracht.

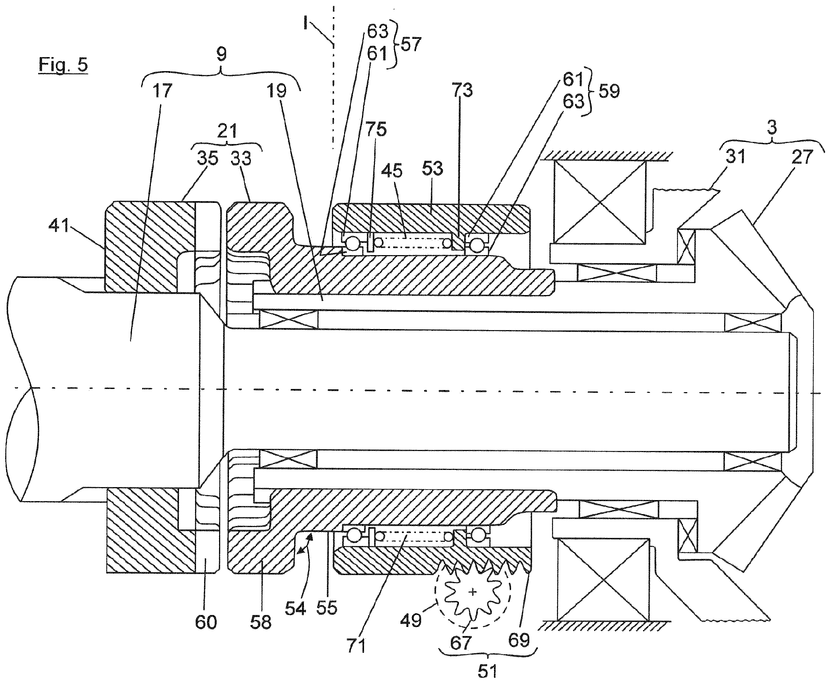

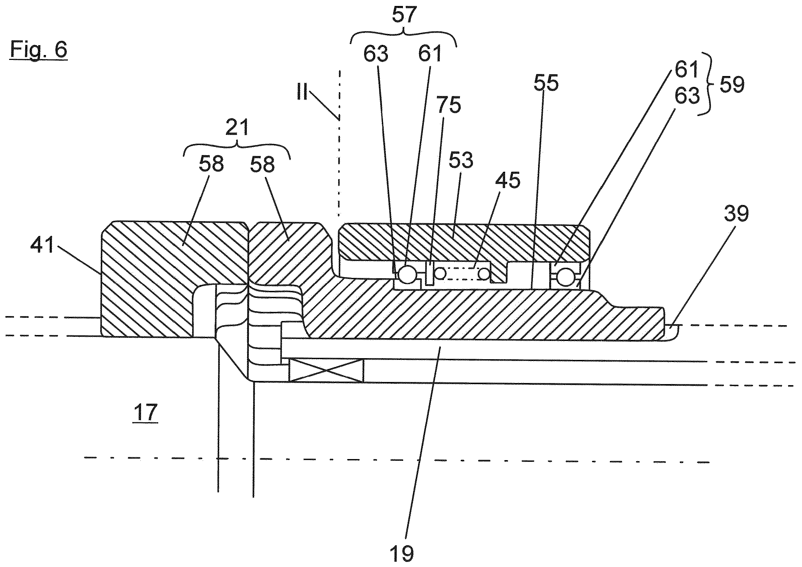

In den Figuren 5 und 6 ist ein zweites Ausführungsbeispiel gezeigt, bei dem der Trägerring 41 nicht mehr axial verschiebbar, sondern vielmehr axial ortsfest sowie drehfest auf der Steckwelle 17 aufgepresst ist. Die Überlastfeder 45 ist in der Figur 7 in einem Ringspalt 71 zwischen der Aktorhülse 53 und dem zylindrischen Schiebemuffen-Außenumfang 55 angeordnet.

Im Unterschied zum ersten Ausführungsbeispiel ist in der Figur 5 die Aktorhülse 53 nicht mehr stellkraftübertragend, sondern vielmehr axial verschiebbar auf dem Lageraußenring 61 des jeweiligen Wälzlagers 57, 59 angeordnet. Der Lagerinnenring 63 des Wälzlagers 57, 59 ist nach wie vor axial ortsfest sowie drehfest, das heißt stellkraftübertragend, auf der Schiebemuffe 37 positioniert. Die Überlastfeder 45 ist in der Figur 5 in Axialrichtung zwischen einem Axialanschlag 73 der Aktorhülse 53 und einer Zwischenscheibe 75 abgestützt. Diese ist lose innerhalb des Ringspalts 71 positioniert und drückt gegen den Lageraußenring 61 des Wälzlagers 57.

Nachfolgend wird ein Schließvorgang der in der Figur 5 gezeigten Klauenkupplung 21 beschrieben. In der Figur 5 stehen die rad- und achsseitigen Schaltklauen 33, 35 einander Zahn 58 auf Lücke 60 gegenüber, so dass die Aktorhülse 53 mitsamt der Schiebemuffe 37 bewegungsgekoppelt leichtgängig in die Schließposition II verstellbar sind, um eine Formschlussverbindung zwischen den achs- und radseitigen Schaltklauen 33, 35 herzustellen.

Anhand der Figur 6 ist ein Schließvorgang veranschaulicht, bei dem die Schaltklauen 33, 35 einander Zahn 58 auf Zahn 58 gegenüberstehen. In diesem Fall wird beim Schließvorgang die Aktorhülse 53 mitsamt Schiebemuffe 37 zunächst bewegungsgekoppelt verstellt, und zwar bis Erreichen der Anlage Zahn 58 auf Zahn 58 (Figur 6). Ab Erreichen der Anlage Zahn 58 auf Zahn 58 (Figur 6) wird die Aktorhülse 53 um den Überlasthub Δh - bewegungsentkoppelt von der Schiebemuffe 37 - weiter bis in ihre Schließposition II verstellt, und zwar unter Aufbau der Federkraft der Überlastfeder 45. Durch eine geringe relative Winkelverdrehung werden die Schaltklauen 33, 35 in eine Relativlage Zahn 58 auf Lücke 60 gebracht, so dass die Schaltklaue 33, 35 unter Abbau der Federkraft schlagartig in Formschlussverbindung bringbar sind.

Zum Ankoppeln (Schließvorgang) wird zunächst die Elektromaschine EM bestromt und somit der verschiebliche Teil der Kupplung auf Raddrehzahl synchronisiert. Ist nahezu Synchronität erreicht, wird der Aktor 49 aktiviert, welcher über eine Verzahnung auf die nicht rotierende Aktorhülse 53 wirkt. Diese drückt über eine Feder-Kugellager-Kombination auf den verschieblichen Teil der Klauenkupplung.

### BEZUGSZEICHENLISTE.

- 3: Vorderachsdifferenzial
- 5: Vorderräder
- 7, 9: Antriebswellen der Vorderachse
- 11: Antriebswellen der Hinterachse
- 15: Hinterräder
- 17: radseitiger Wellenabschnitt
- 19: achsseitiger Wellenabschnitt
- 21: Klauenkupplung
- 23: Vorgelege
- 25: Außenzahnrad
- 27: Achskegelräder
- 29: Ausgleichskegelräder
- 31: Ausgleichsgehäuse
- 33: achsseitige Schaltklauen
- 35: radseitige Schaltklauen
- 37: Schiebemuffe
- 39: Steckverzahnung
- 41: Trägerring
- 43: Steckverzahnung
- 45: Überlastfeder
- 47: Axialanschlag
- 49: Aktor
- 51: Getriebestufe
- 53: Aktorhülse
- 54: Inneneckbereich
- 55: zylindrischer Schiebemuffen-Außenumfang
- 57, 59: Wälzlager
- 61: Lageraußenring
- 63: Lagerinnenring
- 67: Antriebszahnrad
- 69: Außenverzahnung
- 71: Ringspalt
- 73: Axialanschlag
- 75: Zwischenscheibe
- EM, EM1, EM2: Elektromaschinen
- U1, U2: Übersetzungsstufen
- Δh: Überlasthub
- I: Offenposition
- II: Schließposition

## Patentansprüche

1. Antriebsvorrichtung für eine Fahrzeugachse (VA) eines zweispurigen Fahrzeugs mit einer Antriebseinheit, die ausgangsseitig auf zumindest eine zu einem Fahrzeugrad (5) führende Antriebswelle (9) abtreibt, wobei die Antriebswelle (9) aufgeteilt ist in einen radseitigen Wellenabschnitt (17) und einen achsseitigen Wellenabschnitt (19), die mittels einer Formschlusskupplung (21) trieblich miteinander koppelbar oder voneinander abkoppelbar sind, um im Fahrbetrieb bei deaktivierter Antriebseinheit (EM) Schleppverluste in der deaktivierten Antriebseinheit (EM) zu vermeiden, wobei die Formschlusskupplung (21) eine Schiebemuffe (37) aufweist, die auf einer Steckverzahnung (39) eines ersten Wellenabschnitts (17) drehfest, jedoch axial verschiebbar angeordnet ist, und wobei dem Aktor (49) eine Aktorhülse (53) zugeordnet ist, die auf einem zylindrischen Schiebemuffen-Außenumfang (55) angeordnet ist, **dadurch gekennzeichnet, dass** zur Drehentkopplung von der im Fahrbetrieb drehenden Schiebemuffe (37) die Aktorhülse (53) über zumindest ein Drehlager (57, 59) auf dem Schiebemuffen-Außenumfang (55) gelagert ist, so dass die von einem Aktor (49) generierte axiale Stellkraft (Fs) über die drehentkoppelte Aktorhülse (53) und das Drehlager (57, 59) in die Schiebemuffe (37) eingeleitet wird, und dass die Schiebemuffe (39) mittels einer, von einem Aktor (49) generierten axialen Stellkraft (Fs) zwischen einem geöffneten Kupplungszustand, in dem die Schiebemuffe (39) außer Formschlussverbindung mit dem zweiten Wellenabschnitt (19) gebracht ist, und einen geschlossenen Kupplungszustand verschiebbar ist, in dem die Schiebemuffe (37) in Formschlussverbindung mit dem zweiten Wellenabschnitt (17) gebracht ist.

2. Antriebsvorrichtung nach Anspruch 1, **dadurch gekennzeichnet, dass** für eine Stellkraft-Übertragung sowohl ein Lageraußenring (61) des Drehlagers (57, 59) stellkraftübertragend an der Aktorhülse (53) angebunden ist als auch ein Lagerinnenring (63) des Drehlagers (57, 59) stellkraftübertragend an der Schiebemuffe (37) angebunden ist.

3. Antriebsvorrichtung nach Anspruch 1 oder 2, **dadurch gekennzeichnet, dass** die Aktorhülse (53) mittels des Aktors (49) zwischen einer Offenposition (I), bei der die Formschlusskupplung (21) offen ist, und einer Schließposition (II) verstellbar ist, und/oder dass der Aktor (49) über eine Getriebestufe (51) mit der Aktorhülse (53) zusammenwirkt, und dass zur Realisierung der Getriebestufe (51) eine Außenverzahnung (69) auf der Außenumfangsseite der Schiebemuffe (37) ausgebildet ist, die in Axialrichtung voneinander beabstandete Zähne aufweist, die in Zahneingriff mit einem Zahnrad (67) einer Aktorwelle (65) eines Elektromotors (49) ist.

4. Antriebsvorrichtung nach einem der vorhergehenden Ansprüche, **dadurch gekennzeichnet, dass** die Schiebemuffe (37) und der zweite Wellenabschnitt (17) einander axial zugewandte, rad- und achsseitige Schaltklauen (33, 35) aufweisen, und dass der zylindrische Schiebemuffen-Außenumfang (55) unter Bildung eines Inneneckbereiches in die durchmessergrößeren Schaltklauen (19) übergeht, und dass die Aktorhülse (53) bauraumgünstig in dem Inneneckbereich (54) angeordnet ist.

5. Antriebsvorrichtung nach Anspruch 4, **dadurch gekennzeichnet, dass** beim Schließvorgang entweder die rad- und achsseitigen Schaltklauen (33, 35) einander Zahn (58) auf Lücke (60) gegenüberliegen, so dass leichtgängig eine Formschlussverbindung erfolgt, oder die Schaltklauen (33,35) zunächst Zahn (58) auf Zahn (58) in Anlage kommen, und dass ab Erreichen der Anlage Zahn (58) auf Zahn (58) die Aktorhülse (53) weiter bis in die Schließposition (I) verstellt wird, und zwar unter Aufbau einer axial auf die Schaltklauen (33, 35) wirkenden Federkraft einer Überlastfeder (45), die die Schaltklauen (33, 35) gegeneinander verspannt, und dass durch eine geringe relative Winkelverdrehung die Schaltklauen (33, 35) in eine Relativlage Zahn (58) auf Lücke (60) gebracht werden, so dass unter Abbau der Federkraft die Schaltklauen (33, 35) in Formschlussverbindung kommen.

6. Antriebsvorrichtung nach Anspruch 4 oder 5, **dadurch gekennzeichnet, dass** die radseitigen Schaltklauen (35) an einem Trägerring (41) ausgebildet sind, der über eine Steckverzahnung (43) drehfest sowie axial verschiebbar auf dem radseitigen Wellenabschnitt (17) angeordnet ist, und dass der Trägerring (41) auf seiner dem achsseitigen Wellenabschnitt (19) axial gegenüberliegenden Seite mittels der Überlastfeder (45) gegen einen Axialanschlag (47) des radseitigen Wellenabschnitts (17) abgestützt ist, und dass bei einer Anlage Zahn (58) auf Zahn (58) die Aktorhülse (53) mitsamt der Schiebemuffe (37) in die Schließposition (II) verstellt wird, so dass die Schiebemuffe (37) den Trägerring (41) unter Aufbau der Federkraft um einen Überlasthub (Δh) auf dem radseitigen Wellenabschnitt (17) verstellt.

7. Antriebsvorrichtung nach Anspruch 5, **dadurch gekennzeichnet, dass** die Aktorhülse (53) axial verschiebbar, das heißt nicht stellkraftübertragend, auf dem Lageraußenring (61) des Wälzlagers (57, 59) sitzt, und der Lagerinnenring (63) des Drehlagers (57, 59) axial ortsfest sowie drehfest, das heißt stellkraftübertragend, auf der Schiebemuffe (37) sitzt, und/oder dass zwischen der Aktorhülse (53) und dem zylindrischen Schiebemuffen-Außenumfang (55) ein Ringspalt (71) bereitgestellt ist, in dem die Überlastfeder (45) angeordnet ist, und dass die Überlastfeder (45) in Axialrichtung zwischen einem Axialanschlag (73) der Aktorhülse (53) und dem Lageraußenring (63) des Wälzlagers (57, 59) abgestützt ist, und dass beim Schließvorgang bis Erreichen der Anlage Zahn (58) auf Zahn (58) die Aktorhülse (53) und die Schiebemuffe (37) bewegungsgekoppelt verstellt werden, und ab Erreichen der Anlage Zahn (58) auf Zahn (58) die Aktorhülse (53) bewegungsentkoppelt von der Schiebemuffe (37) weiter bis in die Schließposition (II) verstellt wird, und zwar unter Aufbau der Federkraft des Federelements (45).

## Claims

1. Drive device for a vehicle axle (VA) of a two-track vehicle, having a drive unit which outputs drive on the output side to at least one drive shaft (9) leading to a vehicle wheel (5), wherein the drive shaft (9) is divided into a wheel-side shaft portion (17) and into an axle-side shaft portion (19), which, by means of a form-fit clutch (21), are couplable in terms of drive to one another or decouplable in terms of drive from one another in order, during driving operation and with the drive unit (EM) deactivated, to avoid drag losses in the deactivated drive unit (EM), wherein the form-fit clutch (21) has a sliding sleeve (37) which is arranged rotationally conjointly but axially displaceably on a spline toothing (39) of a first shaft portion (17), and wherein the actuator (49) is assigned an actuator sleeve (53) which is arranged on a cylindrical sliding-sleeve outer circumference (55), **characterized in that**, for rotational decoupling from the sliding sleeve (37), which rotates during driving operation, the actuator sleeve (53) is mounted on the sliding-sleeve outer circumference (55) via at least one rotary bearing (57, 59) so that the axial actuating force (Fs) generated by an actuator (49) is introduced into the sliding sleeve (37) via the rotationally decoupled actuator sleeve (53) and the rotary bearing (57, 59), and **in that**, by means of an axial actuating force (Fs) generated by an actuator (49), the sliding sleeve (39) is displaceable between an open coupling state, in which the sliding sleeve (39) has been brought out of form-fitting connection with the second shaft portion (19), and a closed coupling state, in which the sliding sleeve (37) has been brought into form-fitting connection with the second shaft portion (17).

2. Drive device according to Claim 1, **characterized in that**, for transmission of actuating force, both a bearing outer ring (61) of the rotary bearing (57, 59) is attached in an actuating-force-transmitting manner to the actuator sleeve (53) and a bearing inner ring (63) of the rotary bearing (57, 59) is attached in an actuating-force-transmitting manner to the sliding sleeve (37).

3. Drive device according to Claim 1 or 2, **characterized in that**, by means of the actuator (49), the actuator sleeve (53) is adjustable between an open position (I), in which the form-fit clutch (21) is open, and a closing position (II), and/or **in that** the actuator (49) interacts with the actuator sleeve (53) via a transmission stage (51), and **in that**, for the realization of the transmission stage (51), an outer toothing (69) is formed on the outer circumferential side of the sliding sleeve (37), said outer toothing having teeth which are spaced apart from one another in an axial direction and being in toothed engagement with a gear (67) of an actuator shaft (65) of an electric motor (49).

4. Drive device according to one of the preceding claims, **characterized in that** the sliding sleeve (37) and the second shaft portion (17) have wheel-side and axle-side switching claws (33, 35) that face one another axially, and **in that** the cylindrical sliding-sleeve outer circumference (55) transitions into the switching claw (19), which has a larger diameter, such that an inner corner region is formed, and **in that** the actuator sleeve (53) is arranged in an expedient manner in terms of structural space in the inner corner region (54).

5. Drive device according to Claim 4, **characterized in that**, during the closing operation, either the wheel-side and axle-side switching claws (33, 35) are situated opposite one another with a tooth (58)-on-gap (60) configuration, so that a form-fitting connection is realized smoothly, or the switching claws (33, 35) firstly come into abutment with a tooth (58)-on-tooth (58) configuration, and **in that**, once the tooth (58)-on-tooth (58) abutment has been reached, the actuator sleeve (53) is adjusted further into the closed position (I), specifically with the build-up of a spring force of an overload spring (45), which acts axially on the switching claws (33, 35) and braces the switching claws (33, 35) against one another, and **in that**, by way of a slight relative angular rotation, the switching claws (33, 35) are brought into a tooth (58)-on-gap (60) relative position, so that the switching claws (33, 35) come into form-fitting connection with the reduction of the spring force.

6. Drive device according to Claim 4 or 5, **characterized in that** the wheel-side switching claws (35) are formed on a carrier ring (41) which is arranged in a rotationally conjoint and axially displaceable manner on the wheel-side shaft portion (17) via a spline toothing (43), and **in that**, on its side situated axially opposite the axle-side shaft portion (19), the carrier ring (41) is supported against an axial stop (47) of the wheel-side shaft portion (17) by means of the overload spring (45), and **in that**, in the case of a tooth (58)-on-tooth (58) abutment, the actuator sleeve (53), together with the sliding sleeve (37), is adjusted into the closed position (II) so that the sliding sleeve (37) adjusts the carrier ring (41) by an overload travel (Δh) on the wheel-side shaft portion (17) with the build-up of spring force.

7. Drive device according to Claim 5, **characterized in that** the actuator sleeve (53) is seated axially displaceably, that is to say not in an actuating-force-transmitting manner, on the bearing outer ring (61) of the rolling bearing (57, 59), and the bearing inner ring (63) of the rotary bearing (57, 59) is seated in an axially positionally fixed and rotationally conjoint manner, that is to say in an actuating-force-transmitting manner, on the sliding sleeve (37), and/or **in that**, between the actuator sleeve (53) and the cylindrical sliding-sleeve outer circumference (55), there is provided an annular gap (71) in which the overload spring (45) is arranged, and **in that** the overload spring (45) is supported between an axial stop (73) of the actuator sleeve (53) and the bearing outer ring (63) of the rolling bearing (57, 59) in the axial direction, and **in that**, during the closing operation, until the tooth (58)-on-tooth (58) abutment is reached, the actuator sleeve (53) and the sliding sleeve (37) are adjusted in a manner coupled in terms of movement, and, once the tooth (58)-on-tooth (58) abutment has been reached, the actuator sleeve (53) is adjusted in a manner decoupled in terms of movement from the sliding sleeve (37) further into the closing position (II), specifically with the build-up of the spring force of the spring element (45).

## Revendications

1. Dispositif d'entraînement pour un essieu (VA) d'un véhicule à deux voies, comprenant une unité d'entraînement qui, côté sortie, entraîne au moins un arbre d'entraînement (9) menant à une roue (5) du véhicule, l'arbre d'entraînement (9) étant divisé en une partie d'arbre (17) côté roue et une partie d'arbre (19) côté essieu, qui sont accouplables entre elles ou découplables l'une de l'autre au moyen d'une liaison par complémentarité de forme (21) afin d'éviter, en mode de conduite lorsque l'unité d'entraînement (EM) est désactivée, des pertes par traînée dans l'unité d'entraînement désactivée (EM), la liaison (21) par complémentarité de forme comprenant un manchon coulissant (37) qui est agencé de manière solidaire en rotation, mais déplaçable axialement, sur une denture d'emboîtement (39) d'une première partie d'arbre (17), et un manchon (53) d'actionneur étant associé à l'actionneur (49), lequel est agencé sur une périphérie extérieure cylindrique (55) du manchon coulissant, **caractérisé en ce que**, pour le découplage en rotation du manchon coulissant (37) tournant en mode de déplacement, le manchon (53) d'actionneur est monté sur la périphérie extérieure (55) du manchon coulissant par l'intermédiaire d'au moins un palier de rotation (57, 59), de sorte que la force d'actionnement axiale (Fs) générée par un actionneur (49) est transmise au manchon coulissant (37) par l'intermédiaire du manchon (53) d'actionneur couplé en rotation et du palier de rotation (57, 59), et **en ce que** le manchon coulissant (39) est apte à être déplacé au moyen d'une force d'actionnement axiale (Fs) générée par un actionneur (49) entre un état de liaison ouvert, dans lequel le manchon coulissant (39) est amené hors de liaison par complémentarité de forme avec la deuxième partie d'arbre (19), et un état de liaison fermé, dans lequel le manchon coulissant (37) est amené en liaison par complémentarité de forme avec la deuxième partie d'arbre (17).

2. Dispositif d'entraînement selon la revendication 1, **caractérisé en ce que**, pour la transmission de la force d'actionnement, une bague extérieure (61) du palier de rotation (57, 59) est accouplée au manchon (53) d'actionneur de manière à transmettre la force d'actionnement et **en ce qu'**une bague intérieure (63) du palier de rotation (57, 59) est accouplée au manchon coulissant (37) de manière à transmettre la force d'actionnement.

3. Dispositif d'entraînement selon la revendication 1 ou la revendication 2, caractérisé que le manchon (53) d'actionneur est apte à être déplacé au moyen de l'actionneur (49) entre une position d'ouverture (I), dans laquelle la liaison par complémentarité de forme (21) est ouverte, et une position de fermeture (II), et/ou en ce que l'actionneur (49) coopère avec le manchon (53) d'actionneur par l'intermédiaire d'un étage de transmission (51), et en ce que, pour l'actionnement de l'étage de transmission (51), une denture extérieure (69) est formée sur le côté périphérique extérieur du manchon coulissant (37), laquelle présente des dents espacées les unes des autres dans le sens axial, qui sont en prise avec une roue dentée (67) d'un arbre (65) d'actionneur d'un moteur électrique (49).

4. Dispositif d'entraînement selon l'une des revendications précédentes, **caractérisé en ce que** le manchon coulissant (37) et la deuxième partie d'arbre (17) présentent des griffes de commutation (33, 35) tournées axialement l'une vers l'autre, côté roue et côté essieu, et **en ce que** la périphérie extérieure cylindrique du manchon coulissant (55) se prolonge dans les griffes de commutation (19) de plus grand diamètre en formant une zone d'angle intérieur, et **en ce que** le manchon (53) d'actionneur est agencé de manière peu encombrante dans la zone (54) d'angle intérieur.

5. Dispositif d'entraînement selon la revendication 4, **caractérisé en ce que**, lors du processus de fermeture, soit les griffes de commutation (33, 35) côté roue et côté essieu se font face dent (58) contre intervalle (60), de sorte qu'une liaison par complémentarité de forme s'établit facilement, soit les griffes de commutation (33, 35) viennent d'abord en contact dent (58) contre dent (58), et **en ce que**, dès lors qu'une dent (58) vient en butée contre une dent (58), le manchon (53) d'actionneur continue à être déplacé jusqu'à la position de fermeture (I), et ce sous l'effet d'une force élastique d'un ressort de surcharge (45) agissant axialement sur les griffes de commutation (33, 35) et qui serre les griffes de commutation (33, 35) l'une contre l'autre, de sorte qu'une faible rotation angulaire relative amène les griffes de commutation (33, 35) dans une position relative dent (58) contre intervalle (60), de sorte que, sous l'effet de la force élastique, les griffes de commutation (33, 35) viennent en liaison par complémentarité de forme.

6. Dispositif d'entraînement selon la revendication 4 ou la revendication 5, **caractérisé en ce que** les griffes de commutation (35) côté roue sont formées sur une bague de support (41) qui est agencée de manière solidaire en rotation et déplaçable axialement sur la partie d'arbre (17) côté roue par l'intermédiaire d'une denture d'emboîtement (43), et **en ce que** la bague de support (41) est soutenue, sur son côté axialement opposé à la partie d'arbre (19) côté essieu, au moyen du ressort de surcharge (45) contre une butée axiale (47) de la partie d'arbre (17) côté roue, et **en ce que**, lorsqu'une dent (58) est en contact avec une dent (58), le manchon d'actionnement (53) est déplacé avec le manchon coulissant (37) dans la position de fermeture (II), de sorte que le manchon coulissant (37) déplace la bague de support (41) d'une course de surcharge (Δh) sur la partie d'arbre (17) côté roue sous l'effet de la force du ressort.

7. Dispositif d'entraînement selon la revendication 5, **caractérisé en ce que** le manchon (53) d'actionneur est monté de manière axialement mobile, c'est-à-dire sans transmission de force d'actionnement, sur la bague extérieure (61) du palier de rotation (57, 59), et la bague intérieure (63) du palier de rotation (57, 59) est fixe axialement et solidaire en rotation, c'est-à-dire qu'elle transmet la force d'actionnement, sur le manchon coulissant (37), et/ou **en ce qu'**un interstice annulaire (71) est prévu entre le manchon (53) d'actionneur et la périphérie extérieure cylindrique (55) du manchon coulissant, dans lequel est agencé le ressort de surcharge (45), et **en ce que** le ressort de surcharge (45) est soutenu dans le sens axial entre une butée axiale (73) du manchon (53) d'actionneur et la bague extérieure (63) du palier de rotation (57, 59) et **en ce que**, lors du processus de fermeture, jusqu'à ce que la dent (58) vienne en butée contre la dent (58), le manchon (53) d'actionneur et le manchon coulissant (37) sont déplacés de manière accouplée en mouvement, et qu'à partir du moment où la dent (58) vient en butée contre la dent (58), le manchon (53) d'actionneur est déplacé de manière découplée en mouvement par rapport au manchon coulissant (37) jusqu'à la position de fermeture (II), et ce sous l'effet de la force élastique de l'élément élastique (45).
